# EUROPEAN PATENT APPLICATION

(11) **EP 3 915 948 A1**
(43) Date of publication of application: **01.12.2021**
(21) Application number: 21175470.0
(22) Date of filing: 21.05.2021
(51) Int. Cl.: C02F 5/08, C02F 1/68, B01F 1/00, B01F 5/04, F24D 19/00

(54) **ADJUSTABLE DISPENSER UNIT FOR CHEMICAL REAGENTS IN HEATING SYSTEMS**

(30) Priority: 27.05.2020 IT 202000012484
(71) Applicant: Aquamax San S.r.l., 60022 Castelfidardo (AN) (IT)
(72) Inventor: MUSACCHIA, Pasquale, 90138 PALERMO (IT)
(74) Representative: Baldi, Claudio

(57) **Abstract**

A dispenser unit (1, 1') for chemical reagents in heating systems comprises a Venturi pipe fitting (6), a cup (4), a head (2) connected to the cup, an arm (7) for mechanical and hydraulic connection provided with a first end side (14) connected to the upper attachment base (13) of the head, and a second end side (15) connected to said flange (17) of the Venturi pipe fitting, a delivery conduit (22a, 22b) and a return conduit (27) obtained in the arm (7); the upper attachment base (13) of the head has a surface that is inclined by 45° relative to the Y-axis of the cup, and the first end surface (14) of the arm is inclined by 45° relative to the second end side (15).

## Description

The present invention relates to an adjustable dispenser unit for chemical reagents in heating systems, and particularly in domestic boilers. More specifically, the present invention relates to a proportional dispenser of water-softening reagents, generally consisting in polyphosphates or silicopolyphosphates for anti-scale treatment. The dispenser unit is adjustable in such a way that it can be used in horizontal and vertical pipes, as well as in either direction in horizontal pipes.

A dispenser that is commercially available comprises a Venturi pipe fitting suitable for being inserted in a pipe and provided with a flange that lies in a vertical plane, and a tank filled with the reagent and attached to the flange with a counter flange. The tank has a cup-shaped vessel with an opening abutted against a fastening ring under a head that substantially consists in a circular support plate. A two-way circuit is provided between the Venturi pipe fitting and the tank with the reagent. Said two-way circuit comprises a delivery way and a return way, so that the water is delivered to the dispenser from the system and the water added with the reagent is returned from the dispenser to the system, generally upstream a boiler or another device that is to be fed with softened water.

In such an arrangement, because of the fact that the flange and the counter flange lie in vertical planes, the dispenser forms an overturned L with respect to the pipe wherein it is inserted. Therefore, such an arrangement is not suitable when the dispenser is to be installed in a reduced space between a wall and a support plate of the connections in a boiler.

In order to solve such a problem, a dispenser is commercially available, wherein the Venturi pipe fitting that is inserted in the pipe is connected to the tank by means of a flange and a counter flange arranged on a horizontal plane. In such an arrangement, the tank with the reagent is located under the pipe, and the axis of the tank is minimally spaced from the axis of the pipe, in such a way that, being essentially limited to the encumbrance determined by the diameter of the head of the tank, the lateral encumbrance does not exceed the space necessary for the passage of the other conduits that are to be placed between the wall and the support plate of the connections in the boiler.

However, the presence on the market of at least two types of dispensers - the first one being capable of forming an overturned L with respect to the pipe, and the second one being provided with an I-shape under the pipe, with the axis of the tank minimally spaced from the axis of the pipe - represents a drawback for manufacturers, retailers, and installers. As a matter of fact, manufacturers are forced to produce more pieces, retailers are required to keep more stock, and installers need to be equipped with both types of dispensers in order to meet different requirements.

WO2019/234518 discloses an adjustable dispenser comprising a vessel, a head disposed on the vessel, a Venturi pipe fitting, and an arm that connects the head to the Venturi pipe fitting. The arm is shaped like a plate and the head is shaped like a flange. The coupling surface between the arm and the head is parallel to the axis of the vessel. The arm is revolvingly mounted with respect to the head, in such a way to go from an L-position to an I-position. Screw fixing means are provided to fix the arm in the desired position on the head. However, said dispenser is not reliable due to the fact that the arm can revolve with respect to the head. In fact, the screw fixing means that are used to fix the arm to the head may be loosened, and consequently the arm may be moved with respect to the head, generating a tolerance that prevents the conduits of the arm from being in correspondence with the conduits of the head, thus stopping the incoming flow and the outgoing flow into/from the vessel.

The purpose of the present invention is to disclose an adjustable dispenser unit that can be arranged in an overturned L-shaped configuration, wherein the axis of the tank is spaced from the axis of the pipe, and in a substantially I-shaped configuration, wherein the tank is located under the pipe and the axis of the tank is minimally spaced from the axis of the pipe.

Another purpose is to disclose such an adjustable dispenser unit that is reliable, safe, and capable of ensuring a perfect seal and stability between the parts of the dispenser, avoiding the loosening and the formation of tolerances between the parts of the dispenser.

These purposes are achieved according to the invention with the characteristics of the independent claim 1.

Advantageous embodiments will appear from the dependent claims.

The dispenser unit of the invention is defined by claim 1.

Additional features of the invention will be clearer from the following detailed description, which refers to a merely illustrative, not limiting embodiment, shown in the appended figures, wherein:
Fig. 1 is a top view of the adjustable dispenser unit according to the invention, located under the pipe whereto the dispenser unit is connected;
Fig. 2 is an axial view taken along the sectional plane A-A of Fig. 1;
Fig. 2A is a schematic view that illustrates the inclination angles of the upper attachment base of the head and of the first end side of the arm for mechanical and hydraulic connection of the dispenser unit according to the invention;
Fig. 3 is a top view of the adjustable dispenser unit according to the invention, arranged in overturned L-configuration relative to the pipe whereto the dispenser unit is connected;
Fig. 4 is an axial view taken along the sectional plane B-B of Fig. 3;
Fig. 5 is a sectional view taken along the sectional plane C-C of Fig. 4;
Fig. 6 is a sectional view taken along the sectional plane D-D of Fig. 3;
Fig. 7 is a top view of a Venturi pipe fitting rotated by 90° around a horizontal plane with respect to the arrangement shown in Fig. 1, and of a relative arm;
Fig. 8 is an axial view taken along the sectional plane E-E of Fig. 7;
Fig. 9 is a top view of a Venturi pipe fitting rotated by 90° around a vertical plane with respect to the arrangement shown in Fig. 3, and of a relative arm; and
Fig. 10 is an axial view taken along the sectional plane G-G of Fig. 9.

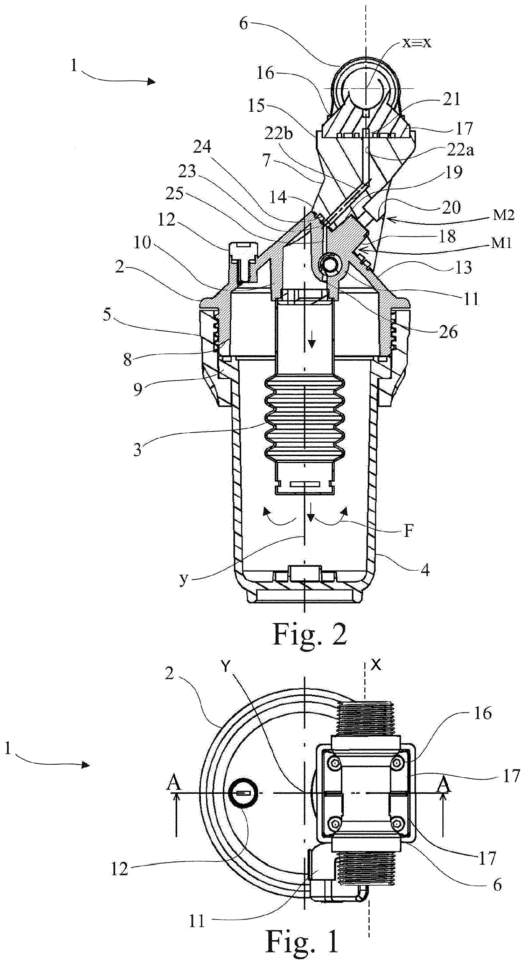

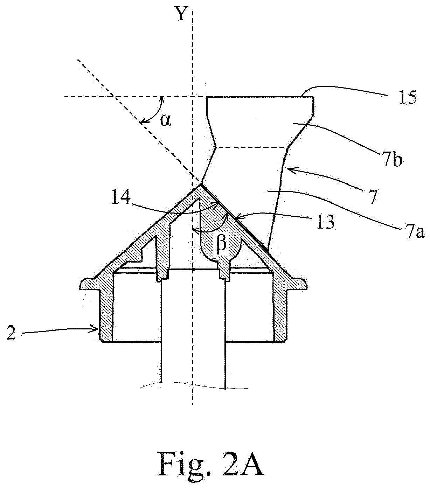

A dispenser unit 1 according to the invention is shown in Figs. 1 and 2, which comprises a proportional dispenser of reagents, wherein the dispenser is disposed in a first configuration, substantially under a pipe (not shown) whereto the dispenser is connected.

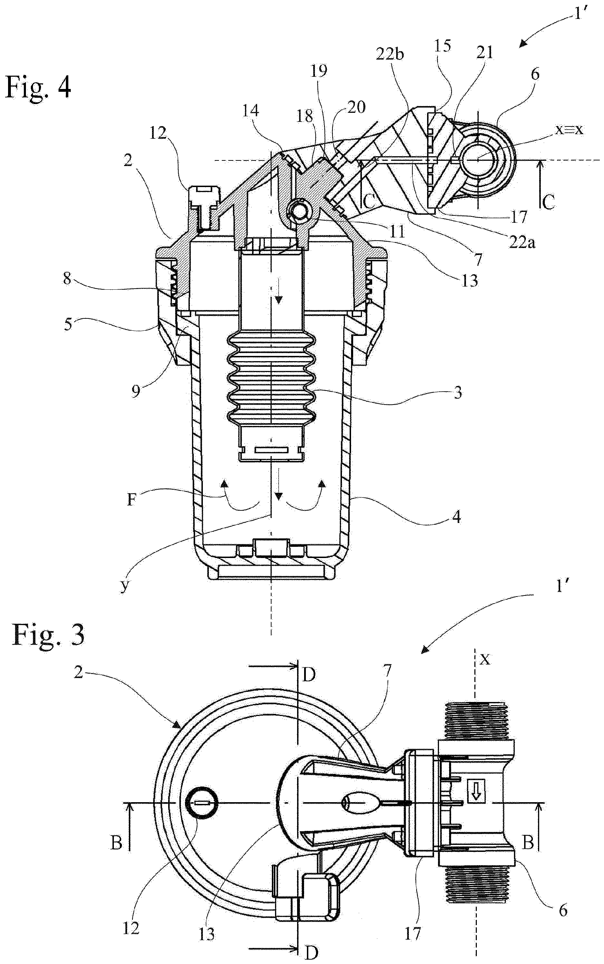

Figs. 3 to 6 illustrate a dispenser unit 1' according to the invention, wherein the dispenser unit is disposed in a second overturned L-shaped configuration with respect to the pipe (not shown).

The parts of the dispenser unit and the means for connecting the dispenser units 1, 1' to the pipe are identical in the two configurations. Therefore, identical parts are indicated with the same reference numerals.

The dispenser unit (1, 1') comprises a head 2 provided with a bellows-like duct 3 that projects in lower position.

A cup 4 is joined by a ferrule 5 to the head 2, so that the bellows-like duct 3 is disposed axially within the cup. The cup 3 has a Y-axis suitable for being disposed vertically. The head 2 is fixed to the cup and protrudes in upper position from the cup.

A Venture pipe fitting 6 with threaded ends is inserted in a pipe (not shown) with the water to be treated. The Venturi pipe fitting 6 has an X-axis that coincides with the axis of the pipe that is disposed horizontally.

An arm 7 for mechanical and hydraulic connection is provided between the Venturi pipe fitting 6 and the head 2.

The head 2 is substantially shaped like a circular support plate, comprising a sleeve portion 8 with an external thread for screwing in the ferrule 5.

The cup 4 has an externally projecting collar-shaped upper rim 9 that is arranged within the ferrule 5.

The cup 4 is of known type and therefore its detailed description is omitted. The internal side of the head 2, that is to say the side facing the cup 4, has a substantially cylindrical section 10 whereto the bellows-like duct 3 is coaxially hung. A tap 11 and an air vent valve 12 are provided on the head 2 of the dispenser unit.

The head 2 has an upwardly tapered, advantageously truncated conical configuration with a lower base defined by the sleeve portion 8, and an upper attachment base 13 that extends over an inclined plane.

The upper attachment base 13 of the head 2 forms an attachment surface for a first end side 14 of the arm 7 for mechanical and hydraulic connection.

The arm 7 has a second end side 15 fixed with bolts 16 to a flange 17 of the Venturi pipe fitting 6. The X-axis of the Venturi pipe fitting is parallel to the flange 17.

The Y-axis of the cup 4 is desired to be disposed in vertical direction. If the X-axis of the Venturi pipe fitting 6 is horizontal, the Y-axis of the cup and the X-axis of the Venturi pipe fitting must be orthogonal to each other.

With reference to Fig. 2A, the upper attachment base 13 of the head has a surface inclined by an angle β of 45° relative to the Y-axis of the cup 4.

The first end side 14 of the arm 7 is inclined by an angle α of 45° relative to the second end side 15 of the arm 7.

When the first end side 14 of the arm 7 is coupled to the upper attachment base 13 of the head, the first end side 14 of the arm 7 is inclined by an angle β relative to the Y-axis of the cup.

In order for the Y-axis of the cup 4 to be disposed in vertical direction, both when the second end side 15 is arranged horizontally and when the second end side 15 is arranged vertically, it is sufficient that the inclination angle β of the surface of the upper attachment base 13 of the head is equal to the inclination angle α between the first end side 14 of the arm 7 and the second end side 15. Said inclination angles α and β must be equal to 45°.

The upper attachment base 13 of the head 2 must have a flat surface obtained by sectioning the truncated conical head 2 with a secant plane inclined by 45° with respect to the Y-axis of the cup 4.

Also the arm 7 for mechanical and hydraulic connection is preferably provided with a truncated conical configuration. Preferably, the arm 7 comprises a first tapered portion 7a with decreasing diameter from said first end side 14, and a second tapered portion 7b with increasing diameter until said second end side 15.

The first end side 14 of the arm 7 is flat. In this way, the upper attachment base 13 of the head 2 and the first end side 14 of the arm 7 for mechanical and hydraulic connection are mated.

Said secant plane must be arranged at 45° relative to the horizontal direction, so that any rotation of the head 2 relative to the arm 7 for mechanical and hydraulic connection ensures that the Y-axis of the cup is always orthogonal to the X-axis of the Venturi pipe fitting. Otherwise said, the inclination angles α and β must be 45°.

Centering means M1 are provided on the upper attachment base 13 of the head 2 and on the surface of the first end face 14 of the arm 7 for mechanical and hydraulic connection in order to provide a quick and precise attachment of the head 2 to the arm 7 for mechanical and hydraulic connection.

Said centering means M1 are of male-female type. Preferably, the centering means M1 comprise a truncated conical protrusion 18 that extends from the upper attachment base 13 of the head 2 and a cavity 19 obtained in the first end side 14 of the arm 7 for mechanical and hydraulic connection.

Advantageously, fixing means M2 are associated with the centering means M1 for fixing the head 2 to the arm 7 for mechanical and hydraulic connection. The fixing means M2 comprise a through hole 20 that is suitably shaped to receive a screw (not shown) suitable for penetrating the head 2 in order to connect the head to the arm 7 for mechanical and hydraulic connection, after inserting the protrusion 18 of the head into the cavity 19 of the arm 7 for mechanical and hydraulic connection.

The protrusion 18 and the cavity 19 are obtained in a substantially central position in the flat surface of the first end face 14 of the arm 7 for mechanical and hydraulic connection, in such a way that a two-way hydraulic communication is obtained in the arm 7 for mechanical and hydraulic connection between the Venturi pipe fitting 6 of the pipe and the dispenser formed by the cup 4, which is suitable for containing the reagents (not shown in the figures), and the head 2.

With reference to Figs. 2, 4 and 5, in the dispenser units 1 and 1' of the invention, the two-way communication between the pipe and the dispenser unit has a delivery circuit comprising a section 21 that comes out orthogonally from the Venturi pipe fitting 6 and passes through the flange 17. After coming out from the flange 17, the delivery circuit continues in the arm 7 for mechanical and hydraulic connection in a section 22a coaxial to the section 21 of the Venturi pipe fitting 6 and in a section 22b angled with respect to the section 22a, so as to be preferably orthogonal to the mating surfaces of the upper attachment base 13 of the head 2 and of the first end side 14 of the arm 7 for mechanical and hydraulic connection.

An annular groove 23 is provided on the first end side 14 of the arm 7 for mechanical and hydraulic connection, circumferentially around the cavity 19. Said annular groove 23 conveys the water coming from the Venturi pipe fitting 6 frontally to the upper attachment base 13 of the head. A second annular groove 24 is provided around the annular groove 23 in coaxial position in order to house an O-ring seal.

A pipe section 25 corresponds in the head 2 to the annular groove 23, said pipe section 25 taking to the tap 11 with elongated shutter. A pipe section 26 comes out of the tap 11 in order to introduce the water in the cup 4 inside the bellows-like duct 3.

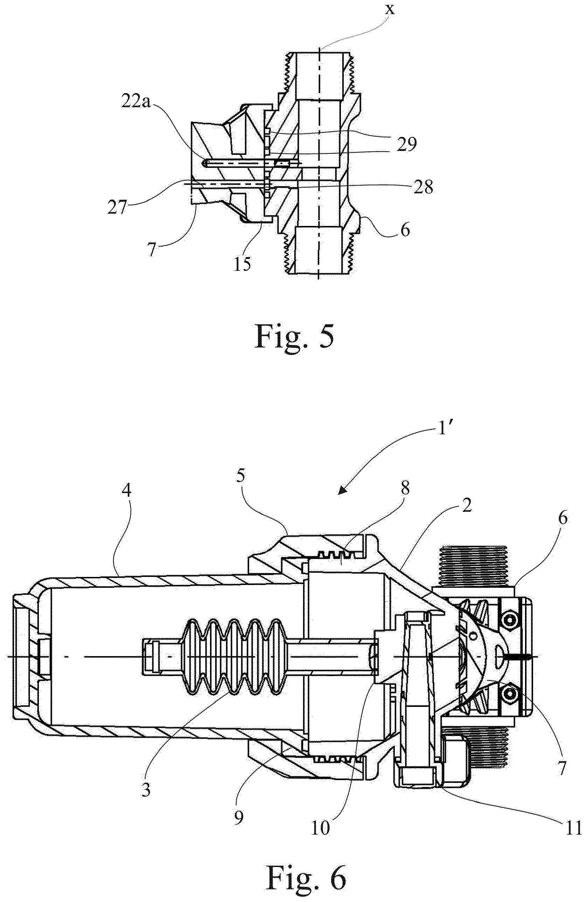

The water follows the path of the arrows F. After coming out of the bellows-like duct 3, the water will gradually convey the reagents contained in the cup 4, and with the passing of time, the reagents will be transported by the water out of the head 2, according to a return circuit that is partially shown in the figures, in a section 27 in the arm 7 of mechanical and hydraulic connection (Fig. 5). An annular groove 28 faces the section 27 in the flange 17 of the Venturi pipe connection 6, in such a way to maintain a continuity of the return circuit, even if the direction of the Venturi pipe fitting 6 is inverted. A groove-like double seat 29 for O-ring seals is provided around the annular groove 28.

As clearly shown in Figs. 2 and 4, because of the configuration of the arm 7 for mechanical and hydraulic connection and of the head 2 of the dispenser unit according to the invention, the arrangement of the dispenser unit 1 can be obtained, wherein the dispenser unit is under the Venturi pipe fitting 6, and the Y-axis of the arm 7 is vertical. Moreover, the arrangement of the dispenser unit 1' can be obtained, wherein the dispenser unit is disposed in an overturned L-shaped configuration with respect to the Venturi pipe fitting 6, wherein the Y-axis of the arm 7 is horizontal.

The arrangement can be changed from the one of the dispenser unit 1 to the one of the dispenser unit 1' without using different parts. In fact, it is simply necessary to rotate the Venturi pipe fitting 6 by 90° in clockwise direction relative to the vertical downward position, and to overturn the arm 7 for mechanical and hydraulic connection relative to the attachment flange 17 of the Venturi pipe fitting, with a rotation of 180°. Consequently, also the head 2 of the tank is rotated by 180°, together with the cup 4.

The continuity of the delivery and return circuit is maintained both in the arrangement of the dispenser unit 1 and in the arrangement of the dispenser unit 1' because of the provision of the annular grooves 23, 28 respectively at the first end side 14 and at the second end side 15 of the arm 7 for mechanical and hydraulic connection.

Eventually, in order to ensure a perfect verticality of the cup 4 with respect to the arm 7 for mechanical and hydraulic connection, the protrusion 18 on the head 2 and the corresponding cavity 19 in the arm 7 for mechanical and hydraulic connection can advantageously have a truncated pyramidal shape, instead of a truncated conical shape. Thus, the square shape of such a male-female coupling between the arm 7 for mechanical and hydraulic connection and the head 2 will determine the two arrangements of the dispenser units 1 and 1' with the desired precision.

The air vent valve 12 provided in the head 2 is of the same type and operates in the same manner as the air vent valves of the dispensers of the prior art. The tap 11, the use of which is already known in other industries, is particularly convenient in the dispenser unit according to the invention because it is provided with an elongated truncated conical shutter that fits the width of the head.

Evidently, the aforementioned embodiment of the present invention, which is illustrated in the appended drawings, is merely a preferred embodiment of the dispenser unit. Alternatively, the 45° connection can be provided in the second end side 15 of the arm 7, which in such a case will be inclined by 45° relative to the horizontal direction, just like the flange 17 of the Venturi pipe fitting.

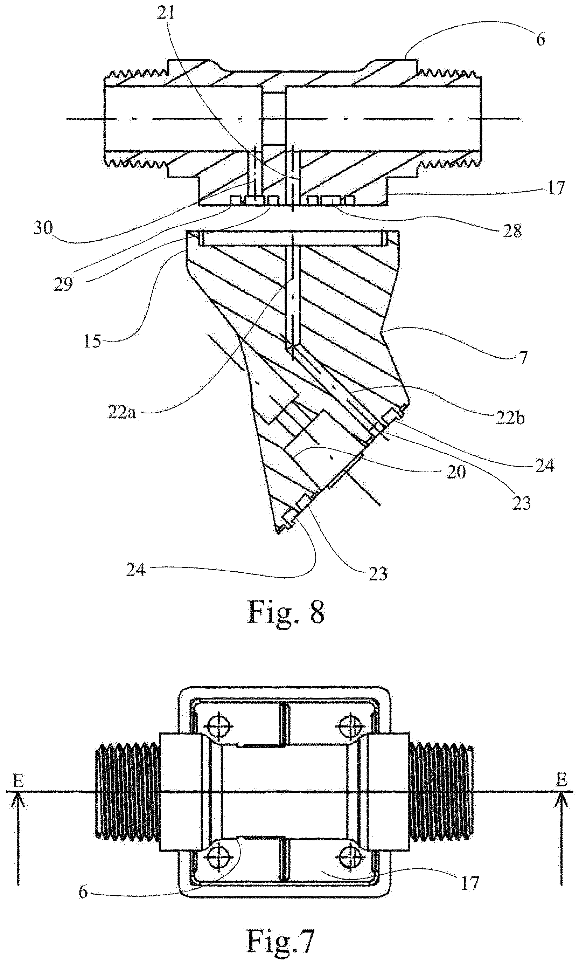

As shown in Figs. 7, 9 and 8, 10, which are top views and longitudinal sections of the Venturi pipe fitting 6 and of the arm 7 in other arrangements, respectively, the arm can be oriented in the same direction as the pipe, and not laterally.

In particular, as shown in Figures 7 and 8, the arm 7 is located under the pipe, but instead of being oriented orthogonally with respect to the pipe, the arm 7 is oriented in the same direction. This is made possible by the centrality of the delivery section 21 of the Venturi pipe fitting in direct communication with the section 22a of the arm 7, and by the return section 30 in the Venturi pipe fitting that is in communication with the annular groove 28, which is laterally limited by the O-ring seals in the seats 29. Evidently, an arrangement wherein the arm 7 is disposed in the opposite direction, that is to say it is rotated by 180° with respect to the arrangement of Fig. 8, is equally possible.

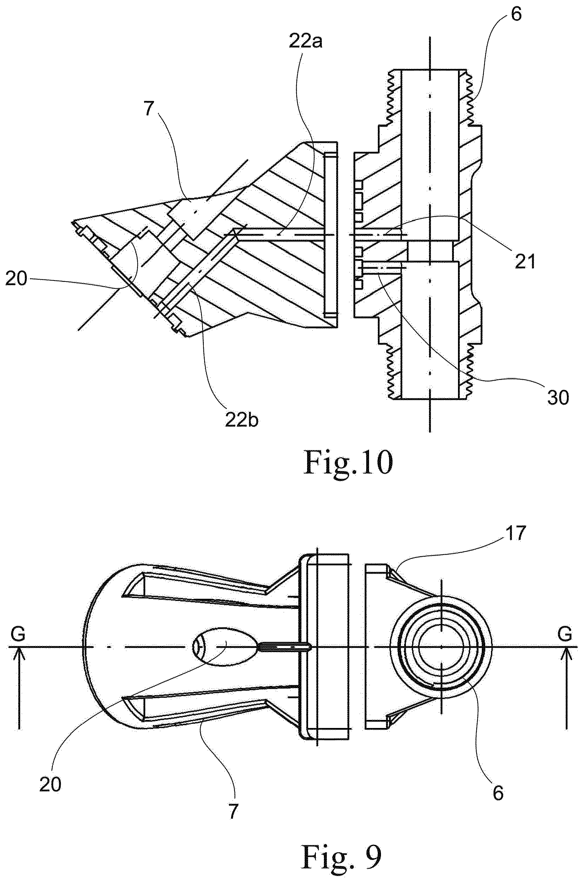

As shown in Figs. 9 and 10, the Venturi pipe fitting, and consequently the pipe can be inclined upwards with respect to the overturned L-shaped arrangement of Figs. 3 and 4, this being permitted by the correspondence of the delivery and return sections between the Venturi pipe fitting 6 and the arm 7, as already described above.

In addition to being arranged under the pipe with an overturned L-shape, the dispenser unit of the invention can be also rotated by 90° with respect to the pipe, both horizontally and vertically, in a significantly advantageous manner both for manufacturers and installers.

## Claims

1. Dispenser unit (1, 1') for chemical reagents in heating systems, comprising:
- a Venturi pipe fitting (6) suitable for being inserted in a pipe; said Venturi pipe fitting having an X-axis and being provided with a flange (17),
- a cup (4) filled with a reagent; said cup (4) having a Y-axis suitable for being disposed vertically,
- a head (2) connected to the cup in such a way to protrude from the cup in upper position; said head (2) being provided with an upper attachment base (13),
- an arm (7) for mechanical and hydraulic connection provided with a first end side (14) connected to the upper attachment base (13) of the head, and a second end side (15) connected to said flange (17) of the Venturi pipe fitting;
- a delivery conduit (22a, 22b) and a return conduit (27) obtained in the arm (7) for mechanical and hydraulic connection to provide a delivery flow and a return flow between the Venturi pipe fitting (6) and the head (2),
**characterized in that**
said upper attachment base (13) of the head has a surface that is inclined by 45° relative to said Y-axis of the cup and
said first end surface (14) of the arm is inclined by 45° relative to said second end side (15).

2. The dispenser unit (1, 1') of claim 1, wherein said upper attachment base (13) of the head has a protuberance (18) and said first end side (14) of the arm for mechanical and hydraulic connection has a cavity (19) in order to form a male-female coupling.

3. The dispenser unit (1, 1') of claim 2, wherein said protuberance (18) of the head and said cavity (19) of the arm for mechanical and hydraulic connection have a truncated conical shape.

4. The dispenser unit (1, 1') of claim 2, wherein said protuberance (18) of the head and said cavity (19) of the arm for mechanical and hydraulic connection have a truncated pyramidal shape.

5. The dispenser (1, 1') according to any one of the preceding claims, wherein said delivery conduit (22a, 22b) of the arm is in communication with a first annular groove (23) obtained in said first end side (14) of the arm, and said return conduit (27) of the arm is in communication with a second annular groove (28) obtained in the flange (16) of the Venturi pipe fitting.

6. The dispenser unit (1, 1') of claim 5, wherein said first annular groove (23) obtained in the first end side of the arm is surrounded by an O-ring disposed in an annular seat (24) obtained in the first end side of the arm, and said second annular groove (28) obtained in the flange (16) of the Venturi pipe fitting is surrounded, both externally and internally, by respective O-rings disposed in annular seats (29) obtained in the flange (16) of the Venturi pipe fitting.

7. The dispenser unit (1, 1') according to any one of the preceding claims, wherein the head (2) and the arm (7) for mechanical and hydraulic connection have a truncated conical shape.

8. The dispenser unit (1, 1') according to any one of the preceding claims, wherein said head (2) comprises an air vent valve (12).

9. The dispenser unit (1, 1') according to any one of the preceding claims, wherein said head (2) comprise a tap (11) with an elongated truncated conical shutter in order to enable an opening/closing of said delivery conduit (22a, 22b) and return conduit (27) of the arm.

10. The dispenser unit (1, 1') according to any one of the preceding claims, wherein said arm (7) comprises a first tapered portion (7a) with decreasing diameter from said first end side (14) and a second tapered portion (7b) with increasing diameter until said second end side (15).
